(19) Europäisches Patentamt
European Patent Office
Office européen des brevets

(11) **EP 4 319 028 A1**

(12) **EUROPEAN PATENT APPLICATION**

(43) Date of publication:
**07.02.2024 Bulletin 2024/06**

(21) Application number: **23189025.2**

(22) Date of filing: **01.08.2023**

(51) International Patent Classification (IPC):
**H04L 5/00** *(2006.01)*     **H04L 1/00** *(2006.01)*
**H04L 27/26** *(2006.01)*

(52) Cooperative Patent Classification (CPC):
**H04L 5/0044; H04L 1/0041; H04L 1/0056;**
**H04L 5/0039; H04L 27/2634;** H04L 5/0005

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.08.2022 US 202263370288 P**
**27.07.2023 US 202318226828**

(71) Applicant: **MediaTek Inc.**
**30078 Hsinchu City (TW)**

(72) Inventors:
• **HU, Shengquan**
**San Jose, 95134 (US)**
• **LIU, Jianhan**
**San Jose, 95134 (US)**
• **YANG, Tung-Sheng**
**30078 Hsinchu City (TW)**
• **PARE, Jr., Thomas Edward**
**San Jose, 95134 (US)**

(74) Representative: **Hoefer & Partner Patentanwälte mbB**
**Pilgersheimer Straße 20**
**81543 München (DE)**

(54) **TRANSMISSION METHODS OF RESOURCE UNIT DISTRIBUTION AND TONE REPETITION FOR ENHANCED LONG RANGE COMMUNICATIONS**

(57) Techniques pertaining to transmission methods of resource unit, RU, distribution and tone repetition for Enhanced Long Range, ELR, communications are described. An apparatus, e.g., station, STA, generates (1810) a resource unit, RU, or multi-RU, MRU. The apparatus then performs (1820) an ELR communication wirelessly with either or both of: -a- duplication of the RU or MRU; and -b- repetition of tones of the RU or MRU.

1800

GENERATE, BY A PROCESSOR OF AN APPARATUS, A RESOURCE UNIT (RU) OR MULTI-RU (MRU)

1810

PERFORM, BY THE PROCESSOR, AN ENHANCED LONG RANGE (ELR) COMMUNICATION WIRELESSLY WITH EITHER OR BOTH OF:
• DUPLICATION OF THE RU OR MRU
• REPETITION OF TONES OF THE RU OR MRU

1820

**FIG. 18**

EP 4 319 028 A1

**Description**

**CROSS REFERENCE TO RELATED PATENT APPLICATION**

The present disclosure is part of a non-provisional patent application claiming the priority benefit of U.S. Provisional Patent Application Nos. 63/370,288, filed 03 August 2022, the content of which herein being incorporated by reference in its entirety.

**TECHNICAL FIELD**

The present disclosure is generally related to wireless communications and, more particularly, to transmission methods of resource unit (RU) distribution and tone repetition for Enhanced Long Range (ELR) communications.

**BACKGROUND**

Unless otherwise indicated herein, approaches described in this section are not prior art to the claims listed below and are not admitted as prior art by inclusion in this section.
In wireless communications such as Wi-Fi (or WiFi) in accordance with the Institute of Electrical and Electronics Engineers (IEEE) 802.11 standards, increased reliability and coverage range enhancement are key objectives for next-generation wireless local area network (WLAN) connectivity. At present time, however, how to achieve reliable transmission with RU duplication and frequency-domain tone repetition for ELR communications has yet to be defined. Therefore, there is a need for a solution of transmission methods of RU distribution and tone repetition for ELR communications.

**SUMMARY**

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.
An objective of the present disclosure is to provide schemes, concepts, designs, techniques, methods and apparatuses pertaining to transmission of RU distribution and tone repetition for ELR communications. A method and an apparatus according to the invention are defined in the independent claims. The dependent claims define preferred embodiments thereof.
In one aspect, a method may involve generating a RU or multi-RU (MRU). The method may also involve performing an ELR communication wirelessly with either or both of: (a) duplication of the RU or MRU; and (b) repetition of tones of the RU or MRU.
In another aspect, an apparatus may include a transceiver configured to communicate wirelessly and a processor coupled to the transceiver. The processor may generate a RU or MRU. The processor may also perform an ELR communication wirelessly with either or both of: (a) duplication of the RU or MRU; and (b) repetition of tones of the RU or MRU.
It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

**BRIEF DESCRIPTION OF THE DRAWINGS**

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.

FIG. 1 is a diagram of an example network environment in which various solutions and schemes in accordance with the present disclosure may be implemented.

FIG. 2 is a diagram of an example design under a proposed scheme in accordance with the present disclosure.

FIG. 3 is a diagram of an example design under a proposed scheme in accordance with the present disclosure.

FIG. 4 is a diagram of an example scenario under a proposed scheme in accordance with the present disclosure.

FIG. 5 is a diagram of an example scenario under a proposed scheme in accordance with the present disclosure.

FIG. 6 is a diagram of an example scenario under a proposed scheme in accordance with the present disclosure.

FIG. 7 is a diagram of an example design under a proposed scheme in accordance with the present disclosure.

FIG. 8 is a diagram of an example design under a proposed scheme in accordance with the present disclosure.

FIG. 9 is a diagram of an example design under a proposed scheme in accordance with the present disclosure.

FIG. 10 is a diagram of an example design under a proposed scheme in accordance with the present disclosure.

FIG. 11 is a diagram of an example scenario under a proposed scheme in accordance with the present disclosure.

FIG. 12 is a diagram of an example scenario under a proposed scheme in accordance with the present disclosure.

FIG. 13 is a diagram of an example design under a proposed scheme in accordance with the present disclosure.

FIG. 14 is a diagram of an example design under a proposed scheme in accordance with the present disclosure.

FIG. 15 is a diagram of an example design under a proposed scheme in accordance with the present disclosure.

FIG. 16 is a diagram of an example design under a proposed scheme in accordance with the present disclosure.

FIG. 17 is a block diagram of an example communication system in accordance with an implementation of the present disclosure.

FIG. 18 is a flowchart of an example process in accordance with an implementation of the present disclosure.

## DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### *Overview*

Implementations in accordance with the present disclosure relate to various techniques, methods, schemes and/or solutions pertaining to transmission methods of RU distribution and tone repetition for ELR communications. According to the present disclosure, a number of possible solutions may be implemented separately or jointly. That is, although these possible solutions may be described below separately, two or more of these possible solutions may be implemented in one combination or another.

It is noteworthy that, in the present disclosure, a regular RU (rRU) refers to a RU with tones that are continuous (e.g., adjacent to one another) and not interleaved, interlaced or otherwise distributed. Moreover, a 26-tone regular RU may be interchangeably denoted as RU26 (or rRU26), a 52-tone regular RU may be interchangeably denoted as RU52 (or rRU52), a 106-tone regular RU may be interchangeably denoted as RU106 (or rRU106), a 242-tone regular RU may be interchangeably denoted as RU242 (or rRU242), and so on. Moreover, an aggregate (26+52)-tone regular multi-RU (MRU) may be interchangeably denoted as MRU78 (or rMRU78), an aggregate (26+106)-tone regular MRU may be interchangeably denoted as MRU132 (or rMRU132), and so on.

It is also noteworthy that, in the present disclosure, a bandwidth of 20MHz may be interchangeably denoted as BW20 or BW20M, a bandwidth of 40MHz may be interchangeably denoted as BW40 or BW40M, a bandwidth of 80MHz may be interchangeably denoted as BW80 or BW80M, a bandwidth of 160MHz may be interchangeably denoted as BW160 or BW160M, a bandwidth of 240MHz may be interchangeably denoted as BW240 or BW240M, a bandwidth of 320MHz may be interchangeably denoted as BW320 or BW320M, a bandwidth of 480MHz may be interchangeably denoted as BW480 or BW480M, a bandwidth of 500MHz may be interchangeably denoted as BW500 or BW500M, a bandwidth of 520MHz may be interchangeably denoted as BW520 or BW520M, a bandwidth of 540MHz may be interchangeably denoted as BW540 or BW540M, a bandwidth of 640MHz may be interchangeably denoted as BW640 or BW640M.

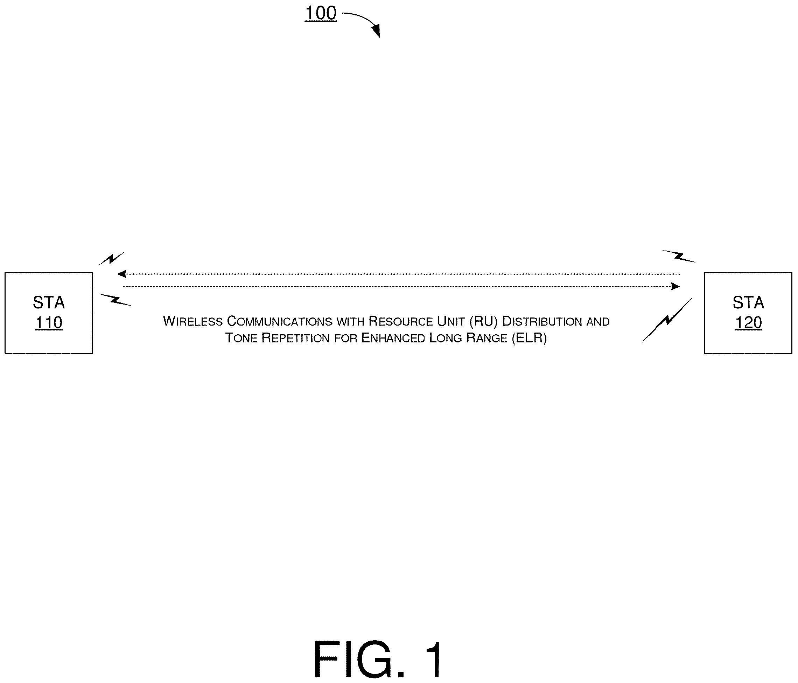

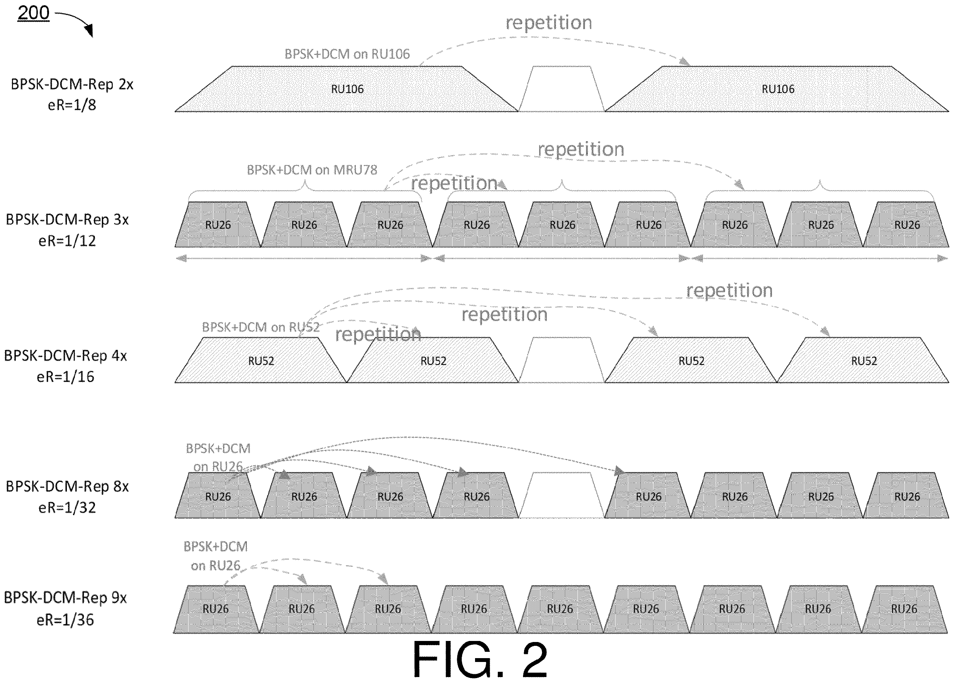

FIG. 1 illustrates an example network environment 100 in which various solutions and schemes in accordance with the present disclosure may be implemented. FIG. 2 ~ FIG. 18 illustrate examples of implementation of various proposed schemes in network environment 100 in accordance with the present disclosure. The following description of various proposed schemes is provided with reference to FIG. 1 ~ FIG. 18.

Referring to FIG. 1, network environment 100 may involve at least a station (STA) 110 communicating wirelessly with a STA 120. Either of STA 110 and STA 120 may be an access point (AP) STA or, alternatively, either of STA 110 and STA 120 may function as a non-AP STA. In some cases, STA 110 and STA 120 may be associated with a basic service set (BSS) in accordance with one or more IEEE 802.11 standards (e.g., IEEE 802.11be and future-developed standards). Each of STA 110 and STA 120 may be configured to communicate with each other by utilizing the transmission methods of RU distribution and tone repetition for ELR communications in accordance with various proposed schemes described below. That is, either or both of STA 110 and STA 120 may function as a "user" in the proposed schemes and examples described below. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

According to the IEEE 802.11 ax specification, support of Enhanced Range (ER) mode is only for single-user (SU) scenarios, and only for the primary 20MHz frequency subblock. Also, transmission of a 242-tone RU in ER mode for SU (ER-SU-242) is in the primary 20MHz frequency subblock and transmission of a 106-tone RU in ER mode for SU (ER-SU-106) is for a higher-frequency 106-tone RU in the primary 20MHz frequency subblock. Moreover, the modulation and coding scheme (MCS) scheme supported is MCS = 0, 1, 2 with one spatial stream (1ss) only (e.g., Mcs0 for ER-SU-106), with a data rate of 1.6Mbps ~ 25.8Mbps.

According to the IEEE 802.11be specification, support of duplication (DUP) mode is only for the 6GHz band, only for SU scenarios, and only for 80MHz, 160MHz and 320MHz bandwidths. Also, the MCS scheme supported is only MCS14 with binary phase-shift keying (BPSK) + dual-carrier modulation (DCM) with an effective coding rate (eR) of 1/8. Moreover, the DUP mode is for 1ss only, with a data rate of 7.3Mbps ~ 36Mbps.

Under various proposed schemes in accordance with the present disclosure, with respect to RU duplication (or repetition) for next-generation WLANs, the ER according to IEEE 802.11ax and DUP according to IEEE 802.11be may be extended with some considerations. For instance, ELR transmission may be performed based on IEEE 802.1be tone plan, RU and MRU, and IEEE 802.11be DUP mode of BPSK + DCM may be extended to 20MHz bandwidth and RUs/MRUs. Moreover, multiple repetitions (e.g., 2x, 3x, 4x, 4x, 8x) may be utilized to achieve a low effective coding rate for enhancement in coverage range. Furthermore, to achieve support of multi-user (MU) scenarios with orthogonal frequency-division multiple-access (OFDMA), the proposed schemes may: (i) reuse IEEE 802.11be RU/MRU tone plan; (ii) not introduce any new RU/MRU size; (iii) reuse existing RU/MRU allocation subfield tables; (iv) flexibly schedule different RU sizes and coding rates (e.g., by a number of repetitions (Nx)); (v) utilize simpler signaling to enable ELR for both non-OFDMA and OFDMA operations; and (vi) reuse existing encoding and padding designs.

FIG. 2 illustrates an example design 200 under a proposed scheme in accordance with the present disclosure. Design 200 may pertain to non-OFDMA for SU ELR with RU duplication/repetition. Part (A) of FIG. 2 shows two-time repetition (2x) with BPSK + DCM (BPSK-DCM-Rep 2x) on a 106-tone RU (RU106) with eR = 1/8. Part (B) of FIG. 2 shows three-time repetition (3x) on a 78-tone MRU (MRU78) with BPSK + DCM (BPSK-DCM-Rep 3x) with eR = 1/12. Part (C) of FIG. 2 shows four-time repetition (4x) on a 52-tone RU (RU52) with BPSK + DCM (BPSK-DCM-Rep 4x) with eR = 1/16. Part (D) of FIG. 2 shows eight-time repetition (8x) with BPSK + DCM (BPSK-DCM-Rep 8x) on a 26-tone RU (RU26) with eR = 1/32. Part (E) of FIG. 2 shows nine-time repetition (9x) with BPSK + DCM (BPSK-DCM-Rep 9x) on a 26-tone RU (RU26) with eR = 1/36.

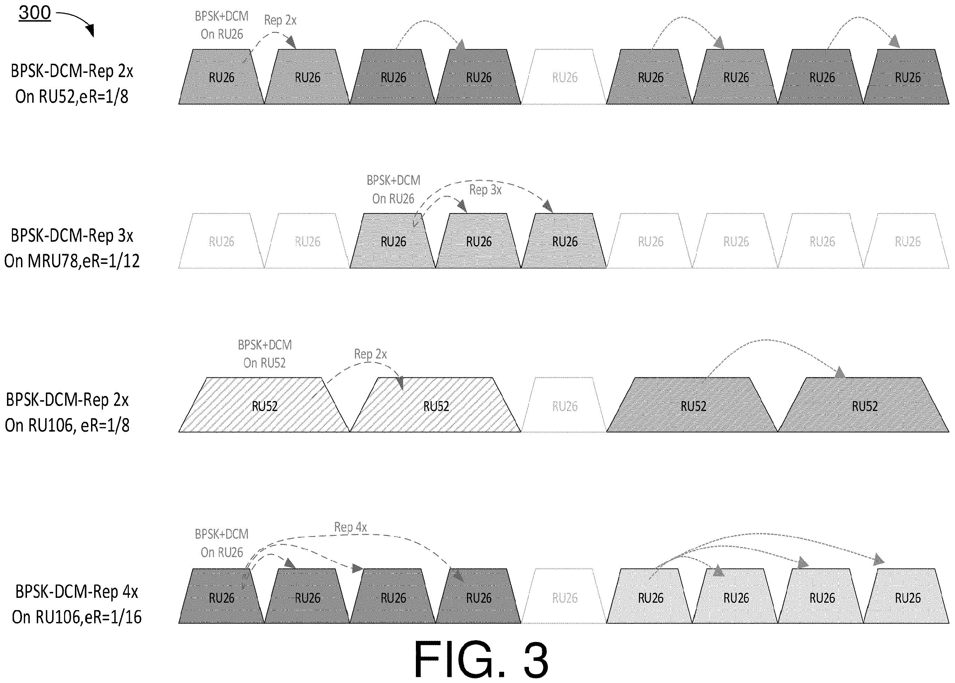

FIG. 3 illustrates an example design 300 under a proposed scheme in accordance with the present disclosure. Design 300 may pertain to OFDMA for MU ELR with RU duplication/repetition. Part (A) of FIG. 3 shows two-time repetition (2x) of a RU26 with BPSK + DCM (BPSK-DCM-Rep 2x) on a 52-tone RU (RU52) with eR = 1/8. Part (B) of FIG. 3 shows three-time repetition (3x) of a RU26 with BPSK + DCM (BPSK-DCM-Rep 3x) on a 78-tone MRU (MRU78) with eR = 1/12. Part (C) of FIG. 3 shows two-time repetition (2x) of a RU52 with BPSK + DCM (BPSK-DCM-Rep 2x) on a 106-tone RU (RU106) with eR = 1/8. Part (D) of FIG. 3 shows four-time repetition (4x) of a RU26 with BPSK + DCM (BPSK-DCM-Rep 4x) on a RU106 with eR = 1/16.

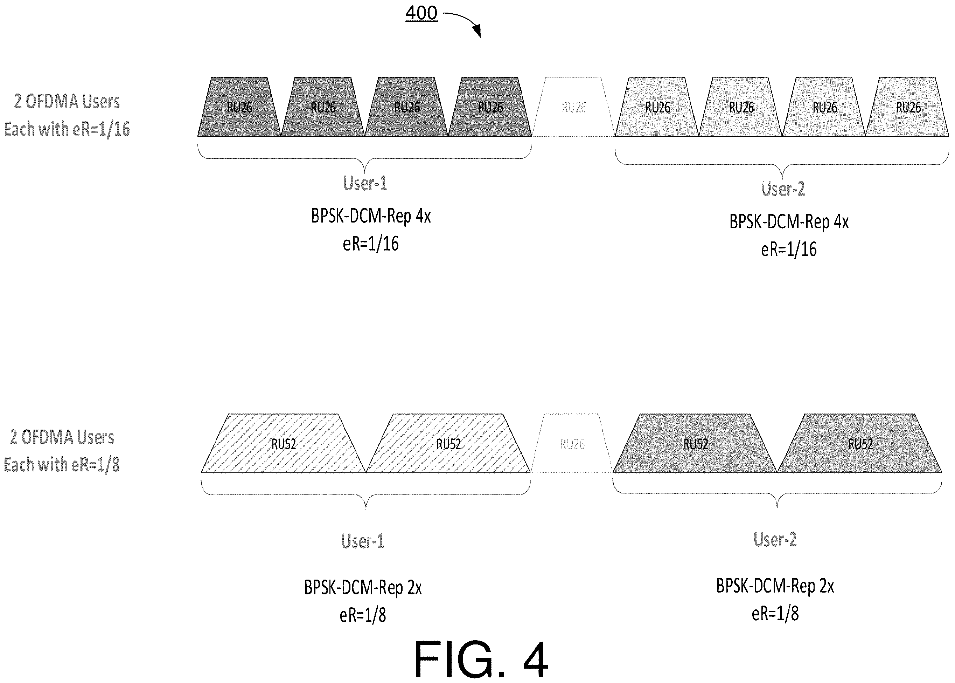

FIG. 4 illustrates an example scenario 400 under a proposed scheme in accordance with the present disclosure. Scenario 400 may pertain to OFDMA for MU ELR with RU duplication/repetition for two users. Part (A) of FIG. 4 shows an example of two OFDMA users each with eR = 1/16. Part (B) of FIG. 4 shows an example of two OFDMA users each with eR = 1/8.

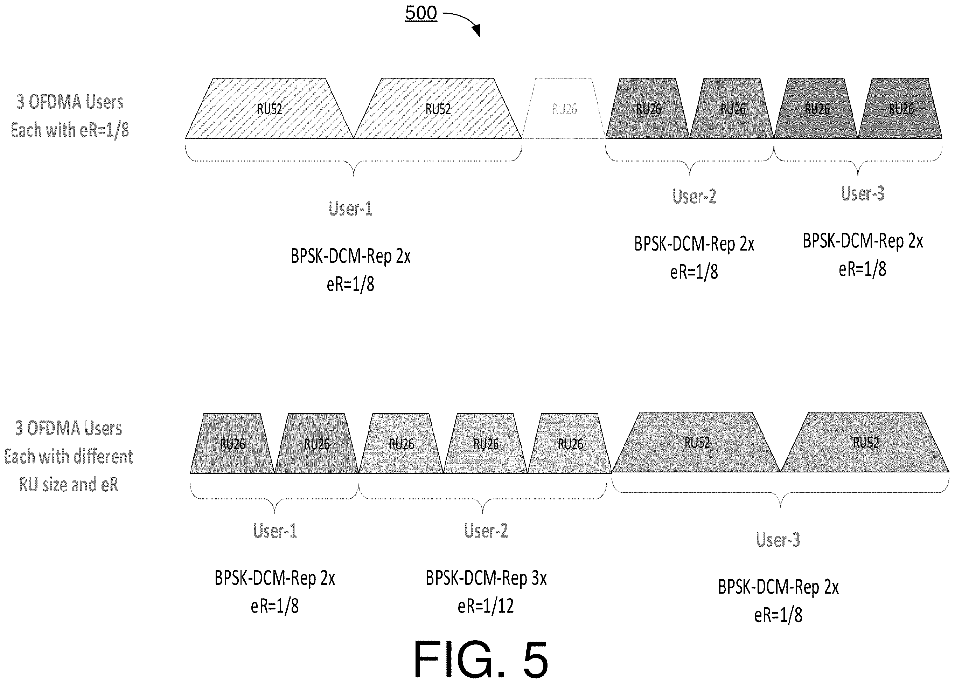

FIG. 5 illustrates an example scenario 500 under a proposed scheme in accordance with the present disclosure. Scenario 500 may pertain to OFDMA for MU ELR with RU duplication/repetition for three users. Part (A) of FIG. 5 shows an example of three OFDMA users each with eR = 1/8. Part (B) of FIG. 5 shows an example of three OFDMA users each with a different RU size and a different eR.

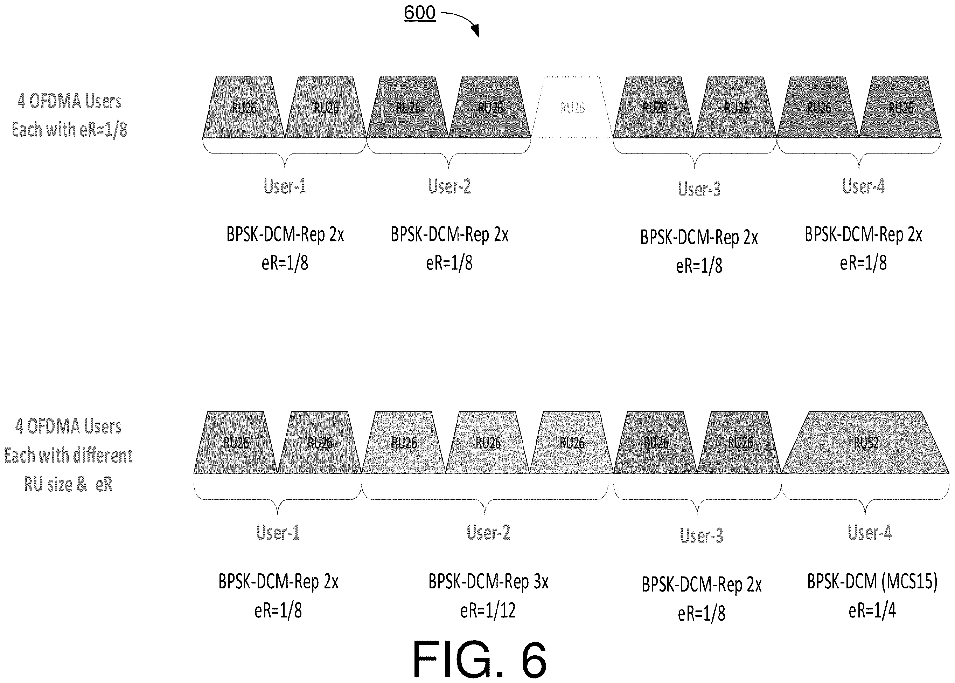

FIG. 6 illustrates an example scenario 600 under a proposed scheme in accordance with the present disclosure. Scenario 600 may pertain to OFDMA for MU ELR with RU duplication/repetition for four users. Part (A) of FIG. 6 shows an example of four OFDMA users each with eR = 1/8. Part (B) of FIG. 6 shows an example of four OFDMA users each with a different RU size and a different eR.

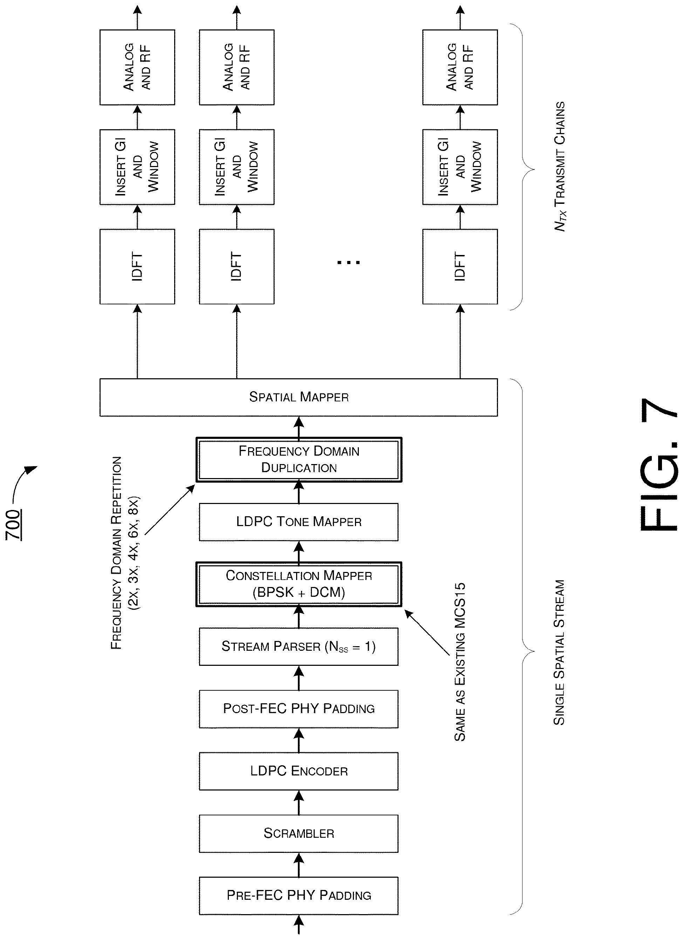

FIG. 7 illustrates an example design 700 under a proposed scheme in accordance with the present disclosure. Design 700 may pertain to transmission functional blocks for ELR with RU DUP with low-density parity check (LDPC) coding. In design 700, a stream of bits of data and/or information may be processed as a single spatial stream through a number of functional blocks, including: pre-forward error correction (pre-FEC) physical-layer (PHY) padding, scrambler, LDPC encoder, post-FEC PHY padding, stream parser (with the number of spatial stream, $N_{ss}$, of 1), constellation mapper (for BPSK + DCM), LDPC tone mapper, frequency-domain (FD) duplication, and spatial mapper. The FD duplication functional block may perform FD repetition of two times (2x), three times (3x), four times (4x), six times (6x) and/or eight times (8x). The spatial mapper functional block may output multiple streams of tones to multiple transmit chains (with a quantity of $N_{TX}$) for transmission. Each of the $N_{TX}$ transmit chains may include a number of functional blocks, including: inverse discrete Fourier transformation (IDFT), insertion of guard interval (GI) and window, and analog and radio frequency (RF).

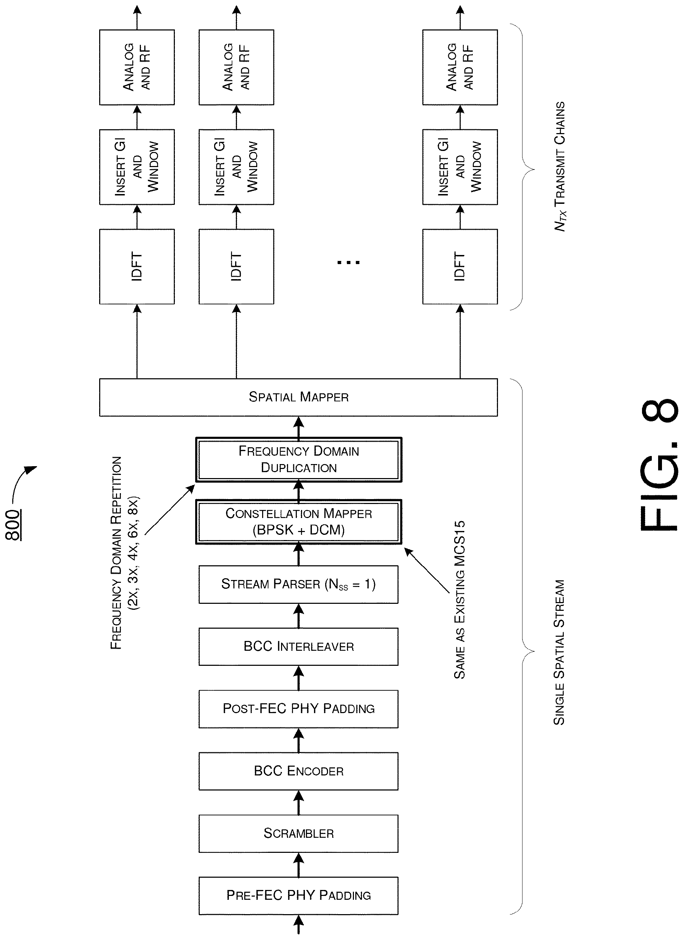

FIG. 8 illustrates an example design 800 under a proposed scheme in accordance with the present disclosure. Design 800 may pertain to transmission functional blocks for ELR with RU DUP with binary convolutional code (BCC) coding. In design 800, a stream of bits of data and/or information may be processed as a single spatial stream through a number of functional blocks, including: pre-FEC PHY padding, scrambler, BCC encoder, post-FEC PHY padding, BCC interleaver, stream parser (with the number of spatial stream, $N_{ss}$, of 1), constellation mapper (for BPSK + DCM), FD duplication, and spatial mapper. The FD duplication functional block may perform FD repetition of 2x, 3x, 4x, 6x and/or 8x. The spatial mapper functional block may output multiple streams of tones to multiple transmit chains (with a quantity of $N_{TX}$) for transmission. Each of the $N_{TX}$ transmit chains may include a number of functional blocks, including: IDFT, insertion of GI and window, and analog and RF.

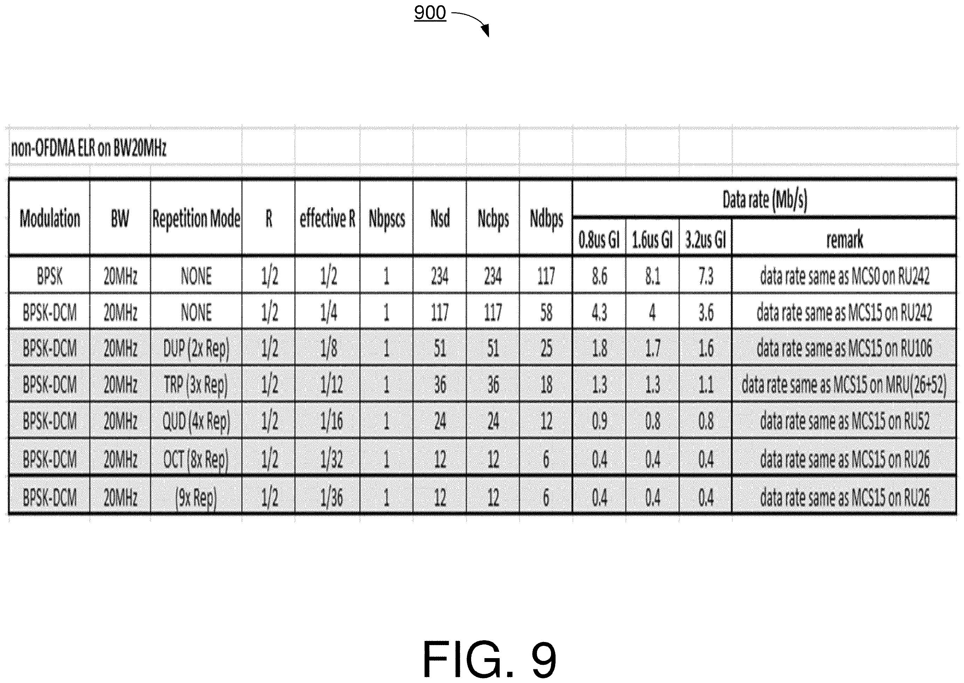

FIG. 9 illustrates an example design 900 under a proposed scheme in accordance with the present disclosure. Design 900 may pertain to modulation, coding rate and data rate for ELR communications with RU duplication/repetition for non-OFDMA SU scenarios with one spatial stream.

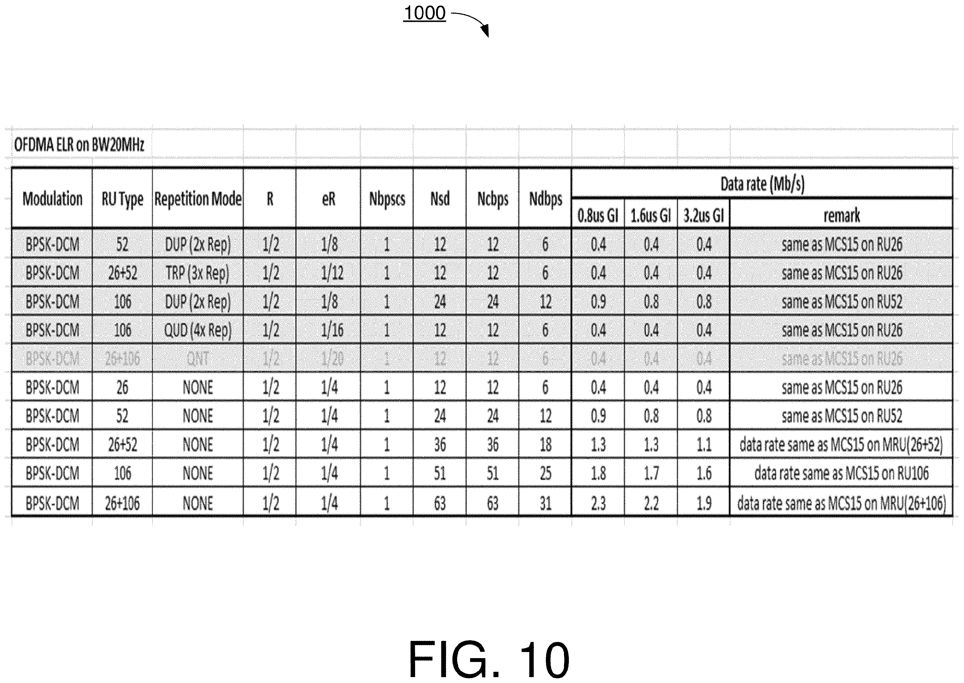

FIG. 10 illustrates an example design 1000 under a proposed scheme in accordance with the present disclosure. Design 1000 may pertain to modulation, coding rate and data rate for ELR communications with RU duplication/repetition for OFDMA MU scenarios with one spatial stream.

Under various proposed schemes in accordance with the present disclosure, with respect to ELR communications, tone repetition may be performed in the frequency domain and for each RU or MRU. The RU/MRU may be based on IEEE 802.11ax/be tone plan with 4x numerology and a subcarrier spacing of 78.125kHz. The number of tone repetition may be 2x, 3x, 4x, 6x, 8x, 9x, 12x, and so on. The tones may be uniformly repeated or distributed over a RU or MRU. For instance, for RU/MRU of different sizes, the number of data subcarriers ($N_{sd}$) may be as follows under the proposed schemes:

$$RU242: N_{sd} = 234 = 2 * 3 * 3 * 13$$

$$RU106: N_{sd} = 102 = 2 * 3 * 17$$

$$RU52: N_{sd} = 48 = 2 * 2 * 2 * 2 * 3$$

$$RU26: N_{sd} = 24 = 2 * 2 * 2 * 3$$

$$MRU(26+52): N_{sd} = 72 = 2 * 2 * 2 * 3 * 3$$

$$MRU(26+106): N_{sd} = 126 = 2 * 3 * 3 * 7$$

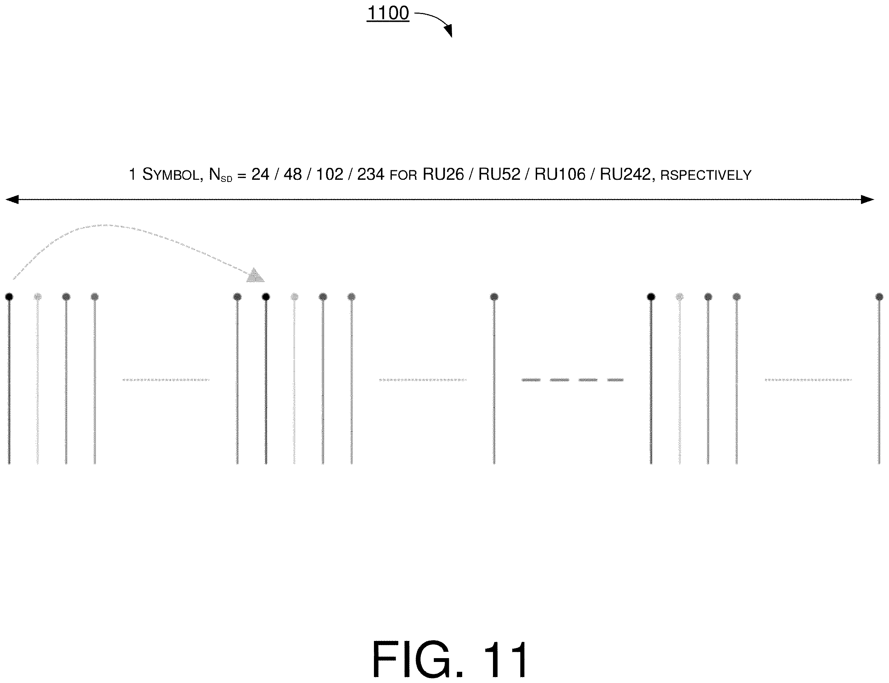

FIG. 11 illustrates an example scenario 1100 under a proposed scheme in accordance with the present disclosure. Scenario 1100 may pertain to FD tone repetition for ELR communications. As shown in FIG. 11, for one symbol, $N_{sd}$ = 24/48/102/234 for RU26/52/106/242.

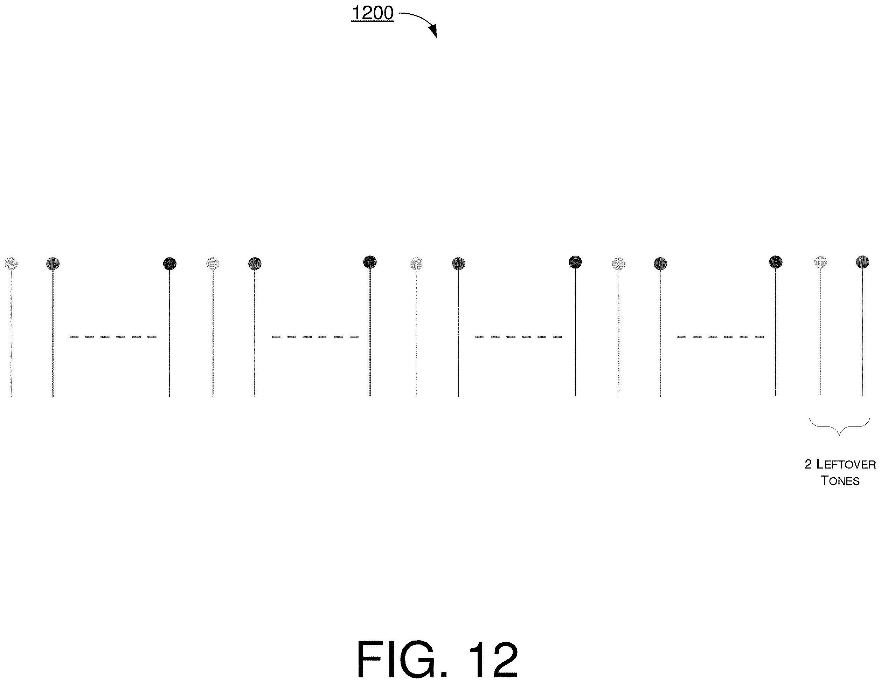

FIG. 12 illustrates an example scenario 1200 with respect to tone repetition with leftover tones under a proposed scheme in accordance with the present disclosure. For some RU sizes and numbers of repetition, there may be leftover tones as follows:

$$RU242: N_{sd} = 234 = 2 * 3 * 3 * 13$$

$$RU106: N_{sd} = 102 = 2 * 3 * 17$$

$$RU52: N_{sd} = 48 = 2 * 2 * 2 * 2 * 3$$

$$RU26: N_{sd} = 24 = 2 * 2 * 2 * 3$$

$$N_{sd} = \left\lfloor \frac{N_{sd, ru}}{N_{x, rep}} \right\rfloor,$$

with the number of leftover tones = $N_{sd,ru} - N_{x,rep} * N_{sd}$

Here, $N_{sd,ru}$ denotes the number of data tones for a given RU, and $N_{x,rep}$ denotes the number of times of tone repetition. For RU242, with 4x repetition, $N_{sd}$ = floor(234 / 4) = 58; 4 * 58 = 232 → 2 tones leftover. For RU242, with 8x repetition, $N_{sd}$ = floor(234 / 8) = 29; 8 * 29 = 232 → 2 tones leftover. For RU106, with 4x repetition, $N_{sd}$ = floor(102 / 4) = 25; 4 * 25 = 100 → 2 tones leftover. For RU106, with 8x repetition, $N_{sd}$ = floor(102 / 8) = 12; 8 * 12 = 96 → 6 tones leftover. In scenario 1200, there are 2 leftover tones.

Under the proposed scheme, tone repetition may be performed in a round-robin and uniformly-distributing fashion. For instance, in case of leftover tones, there may be two options. In a first option (Option-1), the repetition may continue in the leftover tones. In a second option (Option-2), no transmissions may be performed in the leftover tones.

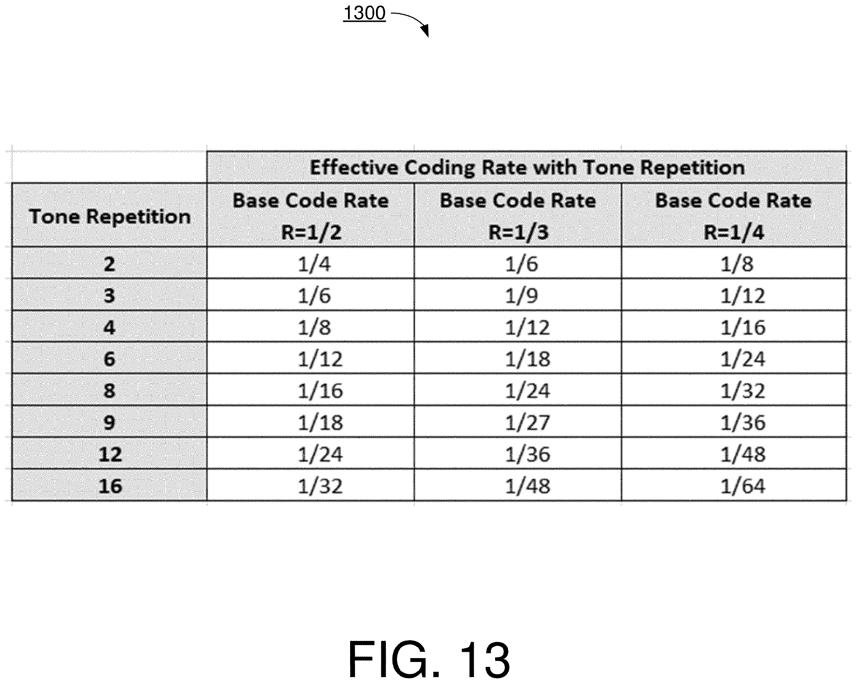

FIG. 13 illustrates an example design 1300 under a proposed scheme in accordance with the present disclosure. In design 1300, under the proposed scheme, a number of tone repetitions may correspond to respective effective coding rates.

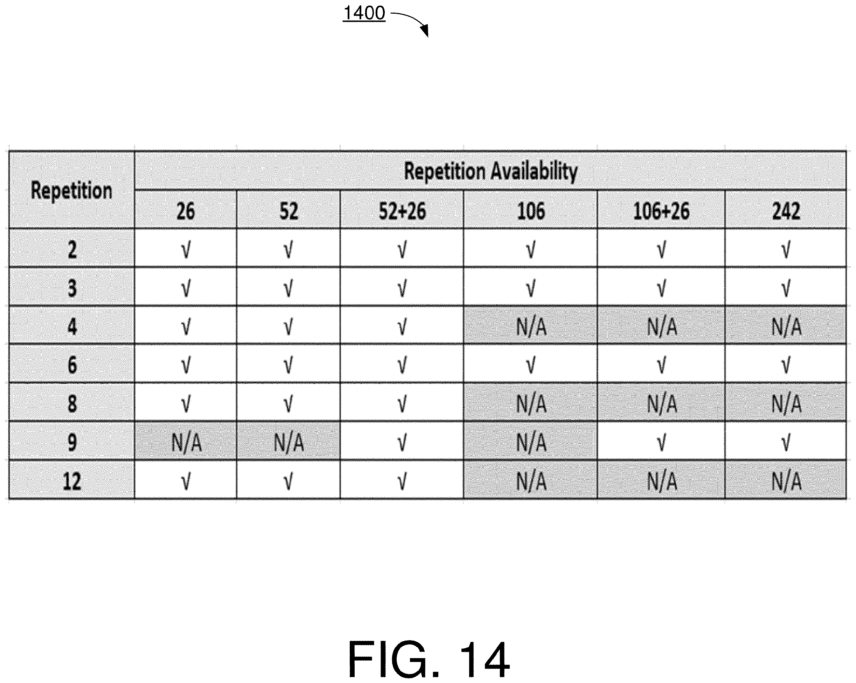

FIG. 14 illustrates an example design 1400 with respect to repetition availability without leftover tones under a proposed scheme in accordance with the present disclosure. In design 1400, under the proposed scheme, each of a number of tone repetitions may be available or feasible for certain sizes of RU/MRU without leftover tones.

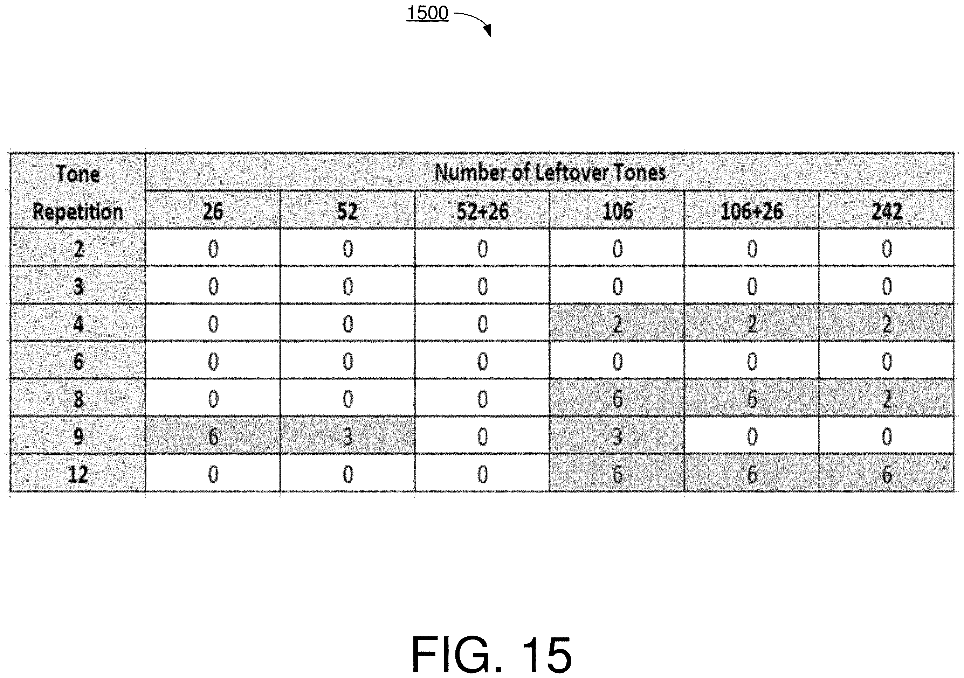

FIG. 15 illustrates an example design 1500 with respect to the number of leftover tones for different RU/MRU sizes and numbers of repetition under a proposed scheme in accordance with the present disclosure. In design 1500, under the proposed scheme, each of a number of tone repetitions may result in zero or some leftover tones for certain sizes of RU/MRU.

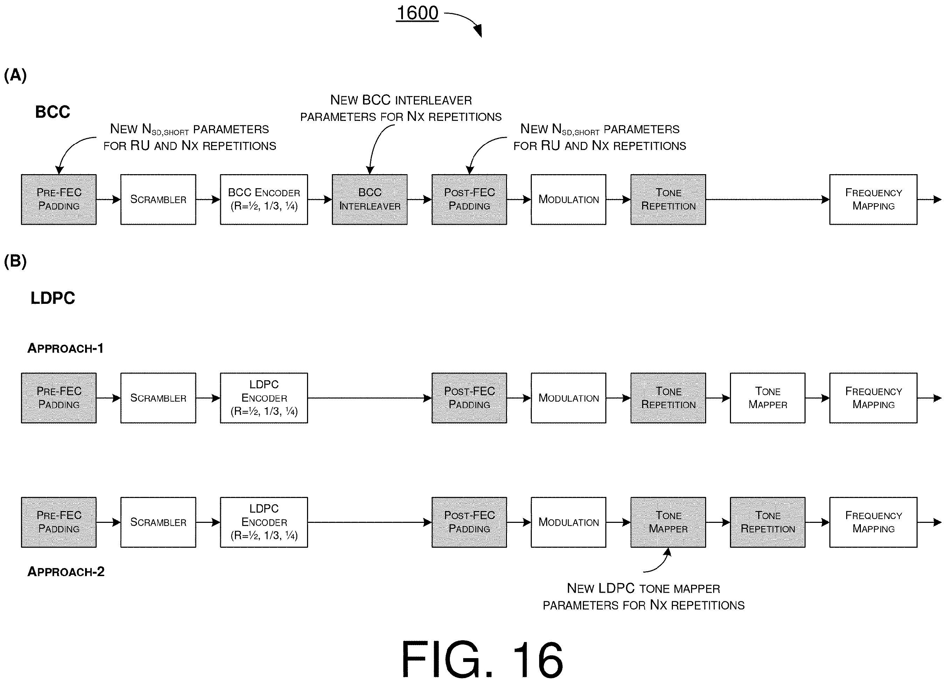

FIG. 16 illustrates an example design 1600 under a proposed scheme in accordance with the present disclosure. Design 1600 may pertain to transmission functional blocks and processing flow for tone repetition in the frequency domain. Part (A) of FIG. 16 shows the transmission functional blocks and processing flow for tone repetition in the frequency domain with BCC coding. The transmission functional blocks and processing flow may include: pre-FEC padding, scrambler, BCC encoder (with a coding rate, R, of ½, 1/3 or¼), BCC interleaver, post-FEC padding, modulation, tone repetition, and frequency mapping. The pre-FEC padding functional block may utilize new $N_{sd,short}$ parameters for RU and the number of repetition. The BCC interleaver functional block may utilize new BCC interleaver parameters for the number of repetition. The post-FEC padding functional block may utilize new $N_{sd,short}$ parameters for RU and the number of repetition.

Part (B) of FIG. 16 shows the transmission functional blocks and processing flow for tone repetition in the frequency domain with LDPC coding. There may be two approaches under the proposed scheme. In a first approach (Approach-1), the transmission functional blocks and processing flow may include: pre-FEC padding, scrambler, LDPC encoder (with a coding rate, R, of ½, 1/3 or ¼), post-FEC padding, modulation, tone repetition, tone mapper, and frequency mapping. In a second approach (Approach-2), the transmission functional blocks and processing flow may include: pre-FEC padding, scrambler, LDPC encoder (with a coding rate, R, of ½, 1/3 or ¼), post-FEC padding, modulation, tone mapper, tone repetition, and frequency mapping. The pre-FEC padding functional block may utilize new $N_{sd,short}$ parameters for RU and the number of repetition. The post-FEC padding functional block may utilize new $N_{sd,short}$ parameters for RU and the number of repetition. The tone mapper functional block may utilize new LDPC tone mapper parameters for the number of repetition.

## Illustrative Implementations

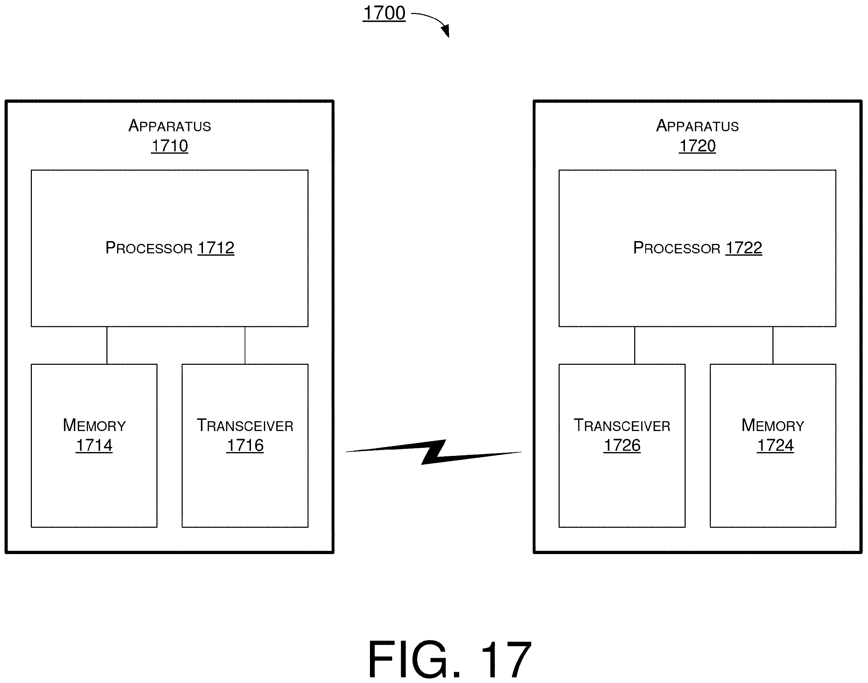

FIG. 17 illustrates an example system 1700 having at least an example apparatus 1710 and an example apparatus 1720 in accordance with an implementation of the present disclosure. Each of apparatus 1710 and apparatus 1720 may perform various functions to implement schemes, techniques, processes and methods described herein pertaining to transmission methods of RU distribution and tone repetition for ELR communications, including the various schemes described above with respect to various proposed designs, concepts, schemes, systems and methods described above as well as processes described below. For instance, apparatus 1710 may be implemented in STA 110 and apparatus 1720 may be implemented in STA 120, or vice versa.

Each of apparatus 1710 and apparatus 1720 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 1710 and apparatus 1720 may be implemented in a smartphone, a smart watch, a personal digital assistant, a digital camera, or a computing equipment such as a tablet computer, a laptop computer or a notebook computer. Each of apparatus 1710 and apparatus 1720 may also be a part of a machine type apparatus, which may be an IoT apparatus such as an immobile or a stationary apparatus, a home apparatus, a wire communication apparatus or a computing apparatus. For instance, each of apparatus 1710 and apparatus 1720 may be implemented in a smart thermostat, a smart fridge, a smart door lock, a wireless speaker or a home control center. When implemented in or as a network apparatus, apparatus 1710 and/or apparatus 1720 may be implemented in a network node, such as an AP in a WLAN.

In some implementations, each of apparatus 1710 and apparatus 1720 may be implemented in the form of one or more integrated-circuit (IC) chips such as, for example and without limitation, one or more single-core processors, one or more multicore processors, one or more reduced-instruction set computing (RISC) processors, or one or more complex-instruction-set-computing (CISC) processors. In the various schemes described above, each of apparatus 1710 and apparatus 1720 may be implemented in or as a STA or an AP. Each of apparatus 1710 and apparatus 1720 may include at least some of those components shown in FIG. 17 such as a processor 1712 and a processor 1722, respectively, for example. Each of apparatus 1710 and apparatus 1720 may further include one or more other components not pertinent to the proposed scheme of the present disclosure (e.g., internal power supply, display device and/or user interface device), and, thus, such component(s) of apparatus 1710 and apparatus 1720 are neither shown in FIG. 17 nor described below in the interest of simplicity and brevity.

In one aspect, each of processor 1712 and processor 1722 may be implemented in the form of one or more single-core processors, one or more multicore processors, one or more RISC processors or one or more CISC processors. That is, even though a singular term "a processor" is used herein to refer to processor 1712 and processor 1722, each of processor 1712 and processor 1722 may include multiple processors in some implementations and a single processor in other implementations in accordance with the present disclosure. In another aspect, each of processor 1712 and processor 1722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 1712 and processor 1722 is a special-purpose machine specifically designed, arranged and configured to perform specific tasks including those pertaining to transmission methods of RU distribution and tone repetition for ELR communications in accordance with various implementations of the present disclosure.

In some implementations, apparatus 1710 may also include a transceiver 1716 coupled to processor 1712. Transceiver 1716 may include a transmitter capable of wirelessly transmitting and a receiver capable of wirelessly receiving data. In some implementations, apparatus 1720 may also include a transceiver 1726 coupled to processor 1722. Transceiver 1726 may include a transmitter capable of wirelessly transmitting and a receiver capable of wirelessly receiving data. It is noteworthy that, although transceiver 1716 and transceiver 1726 are illustrated as being external to and separate from processor 1712 and processor 1722, respectively, in some implementations, transceiver 1716 may be an integral part of processor 1712 as a system on chip (SoC), and transceiver 1726 may be an integral part of processor 1722 as a SoC.

In some implementations, apparatus 1710 may further include a memory 1714 coupled to processor 1712 and capable of being accessed by processor 1712 and storing data therein. In some implementations, apparatus 1720 may further include a memory 1724 coupled to processor 1722 and capable of being accessed by processor 1722 and storing data therein. Each of memory 1714 and memory 1724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 1714 and memory 1724 may include a type of read-only memory (ROM) such as mask ROM, programmable ROM (PROM), erasable programmable ROM (EPROM) and/or electrically erasable programmable ROM (EEPROM). Alternatively, or additionally, each of memory 1714 and memory 1724 may include a type of non-volatile random-access memory (NVRAM) such as flash memory, solid-state memory, ferroelectric RAM (FeRAM), magnetoresistive RAM (MRAM) and/or phase-change memory.

Each of apparatus 1710 and apparatus 1720 may be a communication entity capable of communicating with each other using various proposed schemes in accordance with the present disclosure. For illustrative purposes and without limitation, a description of capabilities of apparatus 1710, as STA 110, and apparatus 1720, as STA 120, is provided below. It is noteworthy that, although a detailed description of capabilities, functionalities and/or technical features of apparatus 1720 is provided below, the same may be applied to apparatus 1710 although a detailed description thereof is not provided solely in the interest of brevity. It is also noteworthy that, although the example implementations described below are provided in the context of WLAN, the same may be implemented in other types of networks.

Under various proposed schemes pertaining to transmission methods of RU distribution and tone repetition for ELR communications in accordance with the present disclosure, with apparatus 1710 implemented in or as STA 110 and apparatus 1720 implemented in or as STA 120 in network environment 100, processor 1712 of apparatus 1710 may generate a RU or MRU. Moreover, processor 1712 may perform, via transceiver 1716, an ELR communication wirelessly (e.g., with apparatus 1720) with either or both of: (a) duplication of the RU or MRU; and (b) repetition of tones of the RU or MRU.

In some implementations, in performing the ELR communication, processor 1712 may perform a non-OFDMA SU ELR communication with duplication of the RU or MRU. In some implementations, in performing the non-OFDMA SU ELR communication with duplication of the RU or MRU, processor 1712 may duplicate the RU or MRU by: (i) two times (2x) of a 106-tone RU (RU106) with eR = 1/8, or (ii) three times (3x) of a 78-tone MRU (MRU78) with eR = 1/12, or (iii) four times (4x) of a 52-tone RU (RU52) with eR = 1/16, or (iv) eight times (8x) of a 26-tone RU (RU26) with eR = 1/32, or (v) nine times (9x) of the RU26 with eR = 1/36.

In some implementations, in performing the ELR communication, processor 1712 may perform an OFDMA MU ELR communication with duplication of the RU or MRU. In some implementations, in performing the OFDMA MU ELR communication with duplication of the RU or MRU, processor 1712 may duplicate the RU or MRU by: (i) two times (2x) of a 26-tone RU (RU26) on a 52-tone RU (RU52) with eR = 1/8, or (ii) three times (3x) of the RU26 on a 78-tone MRU (MRU78) with eR = 1/12, or (iii) two times (2x) of a 52-tone RU (RU52) on a 106-tone RU (RU106) with eR = 1/8, or (iv) four times (4x) of the RU26 on the RU106 with eR = 1/16. In some implementations, in performing the OFDMA MU ELR communication with duplication of the RU or MRU, processor 1712 may duplicate RUs or MRUs associated with multiple users with the RUs or MURs having a same size such that a same effective coding rate is achieved for the multiple users. Alternatively, in performing the OFDMA MU ELR communication with duplication of the RU or MRU, processor 1712 may duplicate RUs or MRUs associated with multiple users with the RUs or MURs having different sizes such that different effective coding rates are achieved for the multiple users.

In some implementations, in performing the ELR communication with duplication of the RU or MRU, processor 1712 may duplicate the RU or MRU with an MCS using BPSK plus DCM.

In some implementations, in performing the ELR communication, processor 1712 may perform the ELR communication with repetition of the tones of the RU or MRU in a frequency domain with the tones uniformly distributed over the RU or MRU in a round-robin fashion. In some implementations, in performing the ELR communication with repetition of the tones of the RU or MRU, processor 1712 may perform certain operations. For instance, processor 1712 may perform the ELR communication with repetition of the tones of the RU or MRU with one or more leftover tones. Moreover, processor 1712 may handle the one or more leftover tones by: (a) continuing the repetition in the one or more leftover tones; or (b) performing no transmission on the one or more leftover tones.

### *Illustrative Processes*

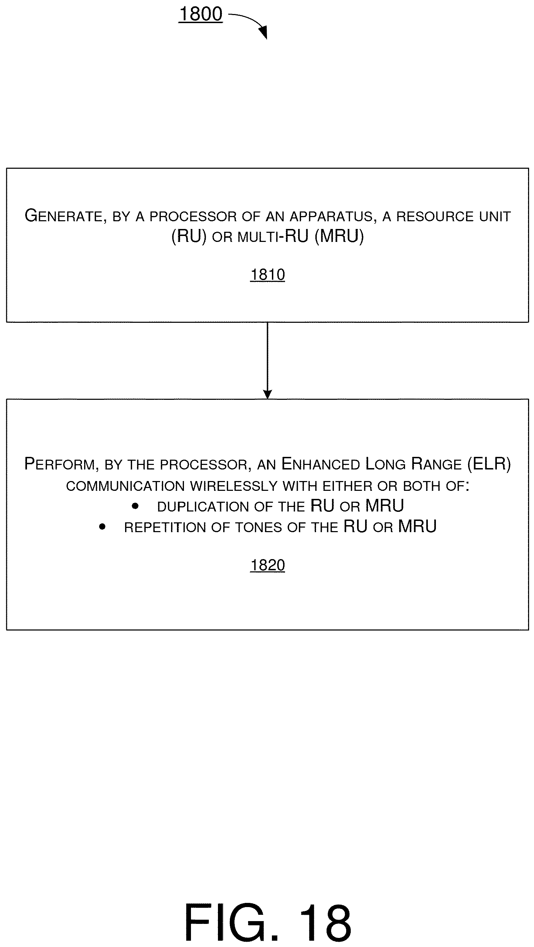

FIG. 18 illustrates an example process 1800 in accordance with an implementation of the present disclosure. Process 1800 may represent an aspect of implementing various proposed designs, concepts, schemes, systems and methods described above. More specifically, process 1800 may represent an aspect of the proposed concepts and schemes pertaining to transmission methods of RU distribution and tone repetition for ELR communications in accordance with the present disclosure. Process 1800 may include one or more operations, actions, or functions as illustrated by one or more of blocks 1810 and 1820. Although illustrated as discrete blocks, various blocks of process 1800 may be divided into additional blocks, combined into fewer blocks, or eliminated, depending on the desired implementation. Moreover, the blocks/sub-blocks of process 1800 may be executed in the order shown in FIG. 18 or, alternatively in a different order. Furthermore, one or more of the blocks/sub-blocks of process 1800 may be executed repeatedly or iteratively. Process 1800 may be implemented by or in apparatus 1710 and apparatus 1720 as well as any variations thereof. Solely for illustrative purposes and without limiting the scope, process 1800 is described below in the context of apparatus 1710 implemented in or as STA 110 functioning as a non-AP STA and apparatus 1720 implemented in or as STA 120 functioning as an AP STA of a wireless network such as a WLAN in network environment 100 in accordance with one or more of IEEE 802.11 standards. Process 1800 may begin at block 1810.

At 1810, process 1800 may involve processor 1712 of apparatus 1710 generating a RU or MRU. Process 1800 may proceed from 1810 to 1820.

At 1820, process 1800 may involve processor 1712 performing, via transceiver 1716, an ELR communication wirelessly (e.g., with apparatus 1720) with either or both of: (a) duplication of the RU or MRU; and (b) repetition of tones of the RU or MRU.

In some implementations, in performing the ELR communication, process 1800 may involve processor 1712 performing a non-OFDMA SU ELR communication with duplication of the RU or MRU. In some implementations, in performing the non-OFDMA SU ELR communication with duplication of the RU or MRU, process 1800 may involve processor 1712 duplicating the RU or MRU by: (i) two times (2x) of a 106-tone RU (RU106) with eR = 1/8, or (ii) three times (3x) of a 78-tone MRU (MRU78) with eR = 1/12, or (iii) four times (4x) of a 52-tone RU (RU52) with eR = 1/16, or (iv) eight times (8x) of a 26-tone RU (RU26) with eR = 1/32, or (v) nine times (9x) of the RU26 with eR = 1/36.

In some implementations, in performing the ELR communication, process 1800 may involve processor 1712 performing an OFDMA MU ELR communication with duplication of the RU or MRU. In some implementations, in performing the OFDMA MU ELR communication with duplication of the RU or MRU, process 1800 may involve processor 1712 duplicating the RU or MRU by: (i) two times (2x) of a 26-tone RU (RU26) on a 52-tone RU (RU52) with eR = 1/8, or (ii) three times (3x) of the RU26 on a 78-tone MRU (MRU78) with eR = 1/12, or (iii) two times (2x) of a 52-tone RU (RU52) on a 106-tone RU (RU106) with eR = 1/8, or (iv) four times (4x) of the RU26 on the RU106 with eR = 1/16. In some implementations, in performing the OFDMA MU ELR communication with duplication of the RU or MRU, process 1800 may involve processor 1712 duplicating RUs or MRUs associated with multiple users with the RUs or MURs having a same size such that a same effective coding rate is achieved for the multiple users. Alternatively, in performing the OFDMA MU ELR communication with duplication of the RU or MRU, process 1800 may involve processor 1712 duplicating RUs or MRUs associated with multiple users with the RUs or MURs having different sizes such that different effective coding rates are achieved for the multiple users.

In some implementations, in performing the ELR communication with duplication of the RU or MRU, process 1800 may involve processor 1712 duplicating the RU or MRU with an MCS using BPSK plus DCM.

In some implementations, in performing the ELR communication, process 1800 may involve processor 1712 performing the ELR communication with repetition of the tones of the RU or MRU in a frequency domain with the tones uniformly distributed over the RU or MRU in a round-robin fashion. In some implementations, in performing the ELR communication with repetition of the tones of the RU or MRU, process 1800 may involve processor 1712 performing certain operations. For instance, process 1800 may involve processor 1712 performing the ELR communication with repetition of the tones of the RU or MRU with one or more leftover tones. Moreover, process 1800 may involve processor 1712 handling the one or more leftover tones by: (a) continuing the repetition in the one or more leftover tones; or (b) performing no transmission on the one or more leftover tones.

***Additional Notes***

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

**Claims**

1. A method, comprising:

   generating (1810), by a processor of an apparatus, a resource unit, in the following also referred to as RU, or multi-RU, in the following also referred to as MRU; and
   performing (1820), by the processor, an Enhanced Long Range, in the following also referred to as ELR, communication wirelessly with either or both of:

   duplication of the RU or MRU; and
   repetition of tones of the RU or MRU.

2. An apparatus (1710), comprising:

   a transceiver (1716) configured to communicate wirelessly; and
   a processor (1712) coupled to the transceiver (1716) and configured to perform operations comprising:

   generating a resource unit, in the following also referred to as RU, or multi-RU, in the following also referred to as MRU; and
   performing, via the transceiver, an Enhanced Long Range, in the following also referred to as ELR, communication wirelessly with either or both of:

   duplication of the RU or MRU; and
   repetition of tones of the RU or MRU.

3. The method of Claim 1 or the apparatus of Claim 2, wherein the performing of the ELR communication comprises performing a non-orthogonal frequency-division multiple-access, in the following also referred to as non-OFDMA, single-user, in the following also referred to as SU, ELR communication with duplication of the RU or MRU.

4. The method or the apparatus of Claim 3, wherein the performing of the non-OFDMA SU ELR communication with duplication of the RU or MRU comprises duplicating the RU or MRU by:

   two times, in the following also referred to as 2x, of a 106-tone RU, in the following also referred to as RU106, with an effective coding rate, in the following also referred to as eR, = 1/8, or

three times, in the following also referred to as 3x, of a 78-tone MRU, in the following also referred to as MRU78, with the eR = 1/12, or

four times, in the following also referred to as 4x, of a 52-tone RU, in the following also referred to as RU52, with the eR = 1/16, or

eight times, in the following also referred to as 8x, of a 26-tone RU, in the following also referred to as RU26, with the eR = 1/32, or

nine times, in the following also referred to as 9x, of the RU26 with the eR = 1/36.

5. The method of Claim 1 or the apparatus of Claim 2, wherein the performing of the ELR communication comprises performing an orthogonal frequency-division multiple-access, in the following also referred to as OFDMA, multi-user, in the following also referred to as MU, ELR communication with duplication of the RU or MRU.

6. The method or the apparatus of Claim 5, wherein the performing of the OFDMA MU ELR communication with duplication of the RU or MRU comprises duplicating the RU or MRU by:

(2x of a RU26 on a RU52 with an eR = 1/8, or
3x of the RU26 on a MRU78 with the eR = 1/12, or
2x of a RU52 on a RU106 with the eR = 1/8, or
4x of the RU26 on the RU106 with the eR = 1/16.

7. The method or the apparatus of Claim 5 or 6, wherein the performing of the OFDMA MU ELR communication with duplication of the RU or MRU comprises duplicating RUs or MRUs associated with multiple users with the RUs or MURs having a same size such that a same effective coding rate is achieved for the multiple users.

8. The method or the apparatus of Claim 5 or 6, wherein the performing of the OFDMA MU ELR communication with duplication of the RU or MRU comprises duplicating RUs or MRUs associated with multiple users with the RUs or MURs having different sizes such that different effective coding rates are achieved for the multiple users.

9. The method of any one of Claims 1 and 3 to 8, or the apparatus of any one of Claims 2 to 8, wherein the performing of the ELR communication comprises performing the ELR communication with duplication of the RU or MRU by duplicating the RU or MRU with a modulation and coding scheme, in the following also referred to as MCS, using binary phase-shift keying, in the following also referred to as BPSK, plus dual-carrier modulation, in the following also referred to as DCM.

10. The method of any one of Claims 1 and 3 to 9, or the apparatus of any one of Claims 2 to 9, wherein the performing of the ELR communication comprises performing the ELR communication with repetition of the tones of the RU or MRU in a frequency domain with the tones uniformly distributed over the RU or MRU in a round-robin fashion.

11. The method or the apparatus of Claim 10, wherein the performing of the ELR communication with repetition of the tones of the RU or MRU comprises:

performing the ELR communication with repetition of the tones of the RU or MRU with one or more leftover tones; and
handling the one or more leftover tones by:

continuing the repetition in the one or more leftover tones; or
performing no transmission on the one or more leftover tones.

STA
110

STA
120

WIRELESS COMMUNICATIONS WITH RESOURCE UNIT (RU) DISTRIBUTION AND
TONE REPETITION FOR ENHANCED LONG RANGE (ELR)

100

FIG. 1

EP 4 319 028 A1

FIG. 2

FIG. 3

FIG. 4

EP 4 319 028 A1

**3 OFDMA Users Each with eR=1/8**

RU52 | RU52 | RU26 | RU26 | RU26 | RU26 | RU26

User-1

BPSK-DCM-Rep 2x
eR=1/8

User-2

BPSK-DCM-Rep 2x
eR=1/8

User-3

BPSK-DCM-Rep 2x
eR=1/8

**3 OFDMA Users Each with different RU size and eR**

RU26 | RU26 | RU26 | RU26 | RU26 | RU52 | RU52

User-1

BPSK-DCM-Rep 2x
eR=1/8

User-2

BPSK-DCM-Rep 3x
eR=1/12

User-3

BPSK-DCM-Rep 2x
eR=1/8

# FIG. 5

4 OFDMA Users
Each with eR=1/8

RU26 RU26   RU26 RU26   RU26   RU26 RU26   RU26 RU26

User-1        User-2            User-3        User-4

BPSK-DCM-Rep 2x    BPSK-DCM-Rep 2x    BPSK-DCM-Rep 2x    BPSK-DCM-Rep 2x
eR=1/8              eR=1/8              eR=1/8              eR=1/8

4 OFDMA Users
Each with different
RU size & eR

RU26 RU26   RU26 RU26 RU26   RU26 RU26   RU52

User-1          User-2              User-3        User-4

BPSK-DCM-Rep 2x    BPSK-DCM-Rep 3x    BPSK-DCM-Rep 2x    BPSK-DCM (MCS15)
eR=1/8              eR=1/12             eR=1/8              eR=1/4

FIG. 6

EP 4 319 028 A1

700

FREQUENCY DOMAIN REPETITION (2X, 3X, 4X, 6X, 8X)

SAME AS EXISTING MCS15

SINGLE SPATIAL STREAM

$N_{TX}$ TRANSMIT CHAINS

PRE-FEC PHY PADDING

SCRAMBLER

LDPC ENCODER

POST-FEC PHY PADDING

STREAM PARSER ($N_{SS} = 1$)

CONSTELLATION MAPPER (BPSK + DCM)

LDPC TONE MAPPER

FREQUENCY DOMAIN DUPLICATION

SPATIAL MAPPER

IDFT

IDFT

IDFT

INSERT GI AND WINDOW

INSERT GI AND WINDOW

INSERT GI AND WINDOW

ANALOG AND RF

ANALOG AND RF

ANALOG AND RF

FIG. 7

800

FREQUENCY DOMAIN REPETITION (2X, 3X, 4X, 6X, 8X)

PRE-FEC PHY PADDING

↓

SCRAMBLER

↓

BCC ENCODER

↓

POST-FEC PHY PADDING

↓

BCC INTERLEAVER

↓

STREAM PARSER ($N_{ss}$ = 1)

↓

CONSTELLATION MAPPER (BPSK + DCM)

↓

FREQUENCY DOMAIN DUPLICATION

↓

SAME AS EXISTING MCS15

SINGLE SPATIAL STREAM

SPATIAL MAPPER

IDFT → INSERT GI AND WINDOW → ANALOG AND RF

IDFT → INSERT GI AND WINDOW → ANALOG AND RF

· · ·

IDFT → INSERT GI AND WINDOW → ANALOG AND RF

$N_{TX}$ TRANSMIT CHAINS

FIG. 8

EP 4 319 028 A1

**non-OFDMA ELR on BW20MHz**

| Modulation | BW | Repetition Mode | R | effective R | Nbpscs | Nsd | Ncbps | Ndbps | Data rate (Mb/s) | | | |
|---|---|---|---|---|---|---|---|---|---|---|---|---|
| | | | | | | | | | 0.8us GI | 1.6us GI | 3.2us GI | remark |
| BPSK | 20MHz | NONE | 1/2 | 1/2 | 1 | 234 | 234 | 117 | 8.6 | 8.1 | 7.3 | data rate same as MCS0 on RU242 |
| BPSK-DCM | 20MHz | NONE | 1/2 | 1/4 | 1 | 117 | 117 | 58 | 4.3 | 4 | 3.6 | data rate same as MCS15 on RU242 |
| BPSK-DCM | 20MHz | DUP (2x Rep) | 1/2 | 1/8 | 1 | 51 | 51 | 25 | 1.8 | 1.7 | 1.6 | data rate same as MCS15 on RU106 |
| BPSK-DCM | 20MHz | TRP (3x Rep) | 1/2 | 1/12 | 1 | 36 | 36 | 18 | 1.3 | 1.3 | 1.1 | data rate same as MCS15 on MRU(26+52) |
| BPSK-DCM | 20MHz | QUD (4x Rep) | 1/2 | 1/16 | 1 | 24 | 24 | 12 | 0.9 | 0.8 | 0.8 | data rate same as MCS15 on RU52 |
| BPSK-DCM | 20MHz | OCT (8x Rep) | 1/2 | 1/32 | 1 | 12 | 12 | 6 | 0.4 | 0.4 | 0.4 | data rate same as MCS15 on RU26 |
| BPSK-DCM | 20MHz | (9x Rep) | 1/2 | 1/36 | 1 | 12 | 12 | 6 | 0.4 | 0.4 | 0.4 | data rate same as MCS15 on RU26 |

900

# FIG. 9

EP 4 319 028 A1

**OFDMA ELR on BW20MHz**

| Modulation | RU Type | Repetition Mode | R | eR | Nbpscs | Nsd | Ncbps | Ndbps | Data rate (Mb/s) | | | |
|---|---|---|---|---|---|---|---|---|---|---|---|---|
| | | | | | | | | | 0.8us GI | 1.6us GI | 3.2us GI | remark |
| BPSK-DCM | 52 | DUP (2x Rep) | 1/2 | 1/8 | 1 | 12 | 12 | 6 | 0.4 | 0.4 | 0.4 | same as MCS15 on RU26 |
| BPSK-DCM | 26+52 | TRP (3x Rep) | 1/2 | 1/12 | 1 | 12 | 12 | 6 | 0.4 | 0.4 | 0.4 | same as MCS15 on RU26 |
| BPSK-DCM | 106 | DUP (2x Rep) | 1/2 | 1/8 | 1 | 24 | 24 | 12 | 0.9 | 0.8 | 0.8 | same as MCS15 on RU52 |
| BPSK-DCM | 106 | QUD (4x Rep) | 1/2 | 1/16 | 1 | 12 | 12 | 6 | 0.4 | 0.4 | 0.4 | same as MCS15 on RU26 |
| BPSK-DCM | 26+106 | QNT | 1/2 | 1/20 | 1 | 12 | 12 | 6 | 0.4 | 0.4 | 0.4 | same as MCS15 on RU26 |
| BPSK-DCM | 26 | NONE | 1/2 | 1/4 | 1 | 12 | 12 | 6 | 0.4 | 0.4 | 0.4 | same as MCS15 on RU26 |
| BPSK-DCM | 52 | NONE | 1/2 | 1/4 | 1 | 24 | 24 | 12 | 0.9 | 0.8 | 0.8 | same as MCS15 on RU52 |
| BPSK-DCM | 26+52 | NONE | 1/2 | 1/4 | 1 | 36 | 36 | 18 | 1.3 | 1.3 | 1.1 | data rate same as MCS15 on MRU(26+52) |
| BPSK-DCM | 106 | NONE | 1/2 | 1/4 | 1 | 51 | 51 | 25 | 1.8 | 1.7 | 1.6 | data rate same as MCS15 on RU106 |
| BPSK-DCM | 26+106 | NONE | 1/2 | 1/4 | 1 | 63 | 63 | 31 | 2.3 | 2.2 | 1.9 | data rate same as MCS15 on MRU(26+106) |

1000

# FIG. 10

1100

1 SYMBOL, $N_{SD}$ = 24 / 48 / 102 / 234 FOR RU26 / RU52 / RU106 / RU242, RSPECTIVELY

FIG. 11

1200

2 LEFTOVER TONES

FIG. 12

| Tone Repetition | Effective Coding Rate with Tone Repetition | | |
|:---:|:---:|:---:|:---:|
| | Base Code Rate R=1/2 | Base Code Rate R=1/3 | Base Code Rate R=1/4 |
| 2 | 1/4 | 1/6 | 1/8 |
| 3 | 1/6 | 1/9 | 1/12 |
| 4 | 1/8 | 1/12 | 1/16 |
| 6 | 1/12 | 1/18 | 1/24 |
| 8 | 1/16 | 1/24 | 1/32 |
| 9 | 1/18 | 1/27 | 1/36 |
| 12 | 1/24 | 1/36 | 1/48 |
| 16 | 1/32 | 1/48 | 1/64 |

FIG. 13

EP 4 319 028 A1

| Repetition | Repetition Availability | | | | | |
|---|---|---|---|---|---|---|
| | 26 | 52 | 52+26 | 106 | 106+26 | 242 |
| 2 | √ | √ | √ | √ | √ | √ |
| 3 | √ | √ | √ | √ | √ | √ |
| 4 | √ | √ | √ | N/A | N/A | N/A |
| 6 | √ | √ | √ | √ | √ | √ |
| 8 | √ | √ | √ | N/A | N/A | N/A |
| 9 | N/A | N/A | √ | N/A | √ | √ |
| 12 | √ | √ | √ | N/A | N/A | N/A |

FIG. 14

1500

| Tone Repetition | Number of Leftover Tones | | | | | |
|---|---|---|---|---|---|---|
| | 26 | 52 | 52+26 | 106 | 106+26 | 242 |
| 2 | 0 | 0 | 0 | 0 | 0 | 0 |
| 3 | 0 | 0 | 0 | 0 | 0 | 0 |
| 4 | 0 | 0 | 0 | 2 | 2 | 2 |
| 6 | 0 | 0 | 0 | 0 | 0 | 0 |
| 8 | 0 | 0 | 0 | 6 | 6 | 2 |
| 9 | 6 | 3 | 0 | 3 | 0 | 0 |
| 12 | 0 | 0 | 0 | 6 | 6 | 6 |

# FIG. 15

1600

**(A)**

**BCC**

NEW $N_{SD,SHORT}$ PARAMETERS FOR RU AND Nx REPETITIONS → PRE-FEC PADDING → SCRAMBLER → BCC ENCODER (R=½, 1/3, ¼) → BCC INTERLEAVER → POST-FEC PADDING → MODULATION → TONE REPETITION → FREQUENCY MAPPING

NEW BCC INTERLEAVER PARAMETERS FOR Nx REPETITIONS → BCC INTERLEAVER

NEW $N_{SD,SHORT}$ PARAMETERS FOR RU AND Nx REPETITIONS → POST-FEC PADDING

**(B)**

**LDPC**

**APPROACH-1**

PRE-FEC PADDING → SCRAMBLER → LDPC ENCODER (R=½, 1/3, ¼) → POST-FEC PADDING → MODULATION → TONE REPETITION → FREQUENCY MAPPING → TONE MAPPER

**APPROACH-2**

PRE-FEC PADDING → SCRAMBLER → LDPC ENCODER (R=½, 1/3, ¼) → POST-FEC PADDING → MODULATION → TONE MAPPER → TONE REPETITION → FREQUENCY MAPPING

NEW LDPC TONE MAPPER PARAMETERS FOR Nx REPETITIONS

**FIG. 16**

27

FIG. 17

EP 4 319 028 A1

1800 ⟍

GENERATE, BY A PROCESSOR OF AN APPARATUS, A RESOURCE UNIT (RU) OR MULTI-RU (MRU)

1810

PERFORM, BY THE PROCESSOR, AN ENHANCED LONG RANGE (ELR) COMMUNICATION WIRELESSLY WITH EITHER OR BOTH OF:
- DUPLICATION OF THE RU OR MRU
- REPETITION OF TONES OF THE RU OR MRU

1820

# FIG. 18

Europäisches
Patentamt

European
Patent Office

Office européen
des brevets

# EUROPEAN SEARCH REPORT

Application Number

EP 23 18 9025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/116921 A1 (LIM DONGGUK [KR] ET AL) 14 April 2022 (2022-04-14) * paragraphs [0151], [0174], [0175], [0190], [0191], [0246], [0257], [0258], [0261] * * figures 5,6 * | 1-11 | INV. H04L5/00 H04L1/00 H04L27/26 |
| E | EP 4 277 188 A1 (MEDIATEK INC [TW]) 15 November 2023 (2023-11-15) * figures 7,8 * * paragraphs [0023], [0024] * | 1,2,5,7, 9 | |

TECHNICAL FIELDS
SEARCHED      (IPC)

H04L

The present search report has been drawn up for all claims

| Place of search | Date of completion of the search | Examiner |
|---|---|---|
| Berlin | 11 December 2023 | Feng, Mei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 9025

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2023

| Patent document cited in search report | | Publication date | Patent family member(s) | | Publication date |
|---|---|---|---|---|---|
| US 2022116921 | A1 | 14-04-2022 | NONE | | |
| EP 4277188 | A1 | 15-11-2023 | EP | 4277188 A1 | 15-11-2023 |
| | | | US | 2023370189 A1 | 16-11-2023 |

For more details about this annex : see Official Journal of the European Patent Office, No. 12/82

EPO FORM P0459

**REFERENCES CITED IN THE DESCRIPTION**

**Patent documents cited in the description**

• US 63370288